# EUROPÄISCHE PATENTSCHRIFT

(11) **EP 3 016 989 B1**
(45) Veröffentlichungstag und Bekanntmachung des Hinweises auf die Patenterteilung: **09.08.2023**
(21) Anmeldenummer: 14731298.7
(22) Anmeldetag: 20.06.2014
(51) Int. Cl.: C08G 18/66, C08G 18/10, C08G 18/42

(54) **POLYURETHAN AUF BASIS VON NACHWACHSENDEN ROHSTOFFEN**
POLYURETHANE BASED ON RENEWABLE RESOURCES
POLYURÉTHANE À BASE DE MATIÈRES PREMIÈRES RENOUVELABLES

(30) Priorität: 02.07.2013 EP 13174649
(43) Veröffentlichungstag der Anmeldung: 11.05.2016
(73) Patentinhaber: BASF SE, 67056 Ludwigshafen (DE)
(72) Erfinder: WETTACH, Henning, 49078 Osnabrück (DE); ISENBÜGEL, Kathrin, 68163 Mannheim (DE)
(74) Vertreter: BASF IP Association
(86) Internationale Anmeldenummer: PCT/EP2014/063032
(87) Internationale Veröffentlichungsnummer: WO 2015/000722

(56) Entgegenhaltungen:
- WO-A1-2008/104541
- WO-A1-2012/173911
- WO-A1-2013/045546

## Beschreibung

Die vorliegende Erfindung betrifft Polyurethane auf Basis mindestens eines Polyisocyanats und mindestens eines Polyesterpolyols, wobei das Polyesterpolyol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde, sowie Verfahren zur Herstellung derartiger Polyurethane und Formkörper enthaltend derartige Polyurethane. Die erfindungsgemäßen Polyurethane zeigen eine geringe Tendenz zum Ausblühen (Blooming).

Polymere Hydroxylverbindungen wie Polyesterpolyole reagieren mit Isocyanaten zu Polyurethanen, die je nach ihren spezifischen mechanischen Eigenschaften vielfältige Einsatzmöglichkeiten finden. Insbesondere Polyesterpolyole werden aufgrund ihrer günstigen Eigenschaften für hochwertige Polyurethanprodukte verwendet.

Polyurethane, die zumindest teilweise unter Verwendung von nachwachsenden Rohstoffen erhalten werden, sind beispielsweise aus der WO 2011/083000 A1, der WO 2012/173911 A1 oder der WO 2010/031792 A1 bekannt.

Die Verwendung natürlicher Rohstoffe gewinnt in der Polymer-Industrie wachsende Bedeutung, da die Ausgangsprodukte mitunter kostengünstiger sind. Auch werden marktseitig zunehmend Polyurethanprodukte auf Basis nachwachsender Rohstoffe und somit zumindest teilweiser Substitution petrochemischer Rohstoffe nachgefragt.

Als natürliche Rohstoffe werden insbesondere Substanzen bezeichnet, die durch Verarbeitung aus Pflanzen, beziehungsweise Teilen von Pflanzen (oder auch Tieren), gewonnen werden. Charakteristisch für Rohstoffe aus nachwachsenden Quellen ist ein signifikant hoher Anteil des Kohlenstoff-Isotop ¹⁴C. Mittels dessen Bestimmung lässt sich der Anteil nachwachsender Rohstoffe experimentell bestimmen. Nachwachsende Rohstoffe unterscheiden sich von durch chemische Synthese bzw. durch Erdölverarbeitung gewonnenen Stoffen darin, dass sie weniger homogen sind. Ihre Zusammensetzung kann deutlich stärker variieren.

Schwankungen in der Zusammensetzung von natürlichen Rohstoffen sind beispielsweise abhängig von Faktoren wie Klima und Region, in der die Pflanze wächst, Jahreszeit der Ernte, Variationen zwischen biologischen Arten und Unterarten und der Art der bei der Gewinnung eingesetzten Extraktionsverfahren (Extrusion, Zentrifugierung, Filterung, Destillation, Schnitt, Pressung etc.). Diese Schwankungen in der Zusammensetzung natürlicher Rohstoffe und das Vorhandensein weiterer, schwer abtrennbarer Begleitstoffe, wie Abbauprodukte oder Verunreinigungen, führen jedoch häufig zu Problemen bei der späteren Verarbeitung und schränken den industriellen Nutzen dieser Stoffe deshalb ein.

Die Herstellung von Polyesterpolyolen durch Umsetzung von aus natürlichen Rohstoffen gewonnenen Edukten ist speziell für die Herstellung von (thermoplastischen) Polyurethanen, beispielsweise für die Schuhindustrie, von großem Interesse.
WO 2008/104541 A1 offenbart ein Verfahren zur Herstellung von Polyesteralkoholen durch Umsetzung von mindestens einer mindestens zweifunktionellen Carbonsäure mit mindestens einem mindestens zweifunktionellen Alkohol, wobei als zweifunktionelle Carbonsäure Bernsteinsäure eingesetzt wird, die biologisch durch Fermentation von Kohlenhydraten hergestellt wurde. Die Herstellung von thermoplastischen Polyurethanen wird ebenfalls offenbart. WO 2013/045546 A1 offenbart die Herstellung von Polyesterolen aus biologisch herstellbaren Bernsteinsäure bzw. Sebacinsäure mit 1,3-Propandiol, sowie die Herstellung von thermoplastischen Polyurethanen. WO 2012/173911 A1 beschreibt die Herstellung von thermoplastischen Polyurethanen auf Basis von Polyesterolen aus Propandiol-1,3 und Adipinsäure und MDI.
WO 2014/029975 beschreibt die Herstellung von Polyurethanen aus nachwachsenden Rohstoffen, beispielsweise unter Verwendung von Polyesterolen aus Propandiol-1,3 oder 1,4-Butandiol, C36-Dimerfettsäure Dicarbonsäure und Sebazinsäure. JP 2012 180 467 offenbart ein Verfahren zur Herstellung von TPUs mit reduzierter Neigung zur Ausblühung ("whitening"). Es werden thermoplastische Polyurethane beschrieben, die auf Polyesterpolyolen basieren, die wiederum auf Sebazinsäure, Adipinsäure und Propandiol/Methylpropandiol basieren.

So ist aus US-A 5695884 die Verwendung von Polyesterpolyolen auf Basis von Sebazinsäure für thermoplastische Polyurethane mit hoher Kristallinität bekannt. Auch US 2006/0141883 A1 und US 2006/0121812 beschreiben die Verwendung von Polyesterpolyolen auf Basis von Sebazinsäure für Polyurethane für Fasern mit einem hohen Schmelzpunkt. In der WO 00/51660 A1 werden Polyurethane für Herzkatheder beschrieben, bei denen Polyesterpolyole auf Basis von Sebazinsäure eingesetzt werden können. Auch hierbei ist eine ausreichende Härte erforderlich. Aus US 2007/0161731 A1 und US 6395833 B1 ist weiterhin bekannt, für die Herstellung von Polyesterpolyolen zur Anwendung in der Polyurethanchemie Sebazinsäure einzusetzen.

JP 2012 180 467 offenbart ein Verfahren zur Herstellung von TPUs mit reduzierter Neigung zur Ausblühung. Auf Seite 10, Tabelle 1, Beispiele 4-6 und 10-11 werden TPU Zusammensetzungen beschrieben, die die Polyesterpolyole POH-4, POH-5, POH-6, POH-10 und POH-11 enthalten, die auf Sebazinsäure, Adipinsäure und Propandiol/Methylpropandiol basieren.

Bei der Verwendung von Polyesterpolyolen auf Basis von Sebazinsäure zur Herstellung von Polyurethanen tritt jedoch vermehrt das Problem von sehr starken Ausblühungen auf, d.h. es bildet sich ein weißer Belag auf dem verarbeiteten Polyurethan, so dass es optisch für viele potentielle Anwendungen nicht mehr akzeptabel ist.

Eine der vorliegenden Erfindung zugrunde liegende Aufgabe bestand darin, Polyurethane, insbesondere thermoplastische Polyurethane, bereitzustellen, die gute mechanische Eigenschaften aufweisen, unter Verwendung nachwachsender Rohstoffe hergestellt werden können und zudem eine reduzierte Neigung zu Ausblühungen haben.

Erfindungsgemäß wird diese Aufgabe gelöst durch ein thermoplastisches Polyurethan auf Basis mindestens eines Polyisocyanats und mindestens eines Polyesterpolyols, wobei das Polyesterpolyol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde,
wobei das Polyurethan mindestens einen Kettenverlängerer enthält,
wobei die Mischung aus mindestens zwei Dicarbonsäuren Sebazinsäure umfasst, die zumindest teilweise aus nachwachsenden Rohstoffen gewonnen wurde, und
wobei der mindestens eine mehrwertige Alkohol 1,3-Propandiol ist, das zumindest teilweise aus nachwachsenden Rohstoffen gewonnen wurde,
wobei mindestens eine der mindestens zwei Dicarbonsäuren und der zur Herstellung der Polyesterpolyole eingesetzte mehrwertige Alkohol und der eingesetzte Kettenverlängerer jeweils zumindest teilweise aus nachwachsenden Rohstoffen gewonnen worden sind.

Erfindungsgemäß basiert das Polyurethan auf mindestens einem Polyisocyanat und mindestens einem Polyesterpolyol, das auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde. Ein Nachweis dafür, dass ein Einsatzstoff aus nachwachsenden Rohstoffen gewonnen wurde, ist beispielsweise über ASTMD6866 per ¹⁴C-Methode möglich.

Erfindungsgemäß enthält das Polyurethan mindestens einen Kettenverlängerer. Darüber hinaus kann das Polyurethan weitere Komponenten aufweisen, beispielsweise Kettenverlängerer oder auch Hydrolyseschutzmittel, Antioxidantien, UV-Stabilisatoren, Weichmacher, organische oder anorganische Füllstoffe, Entformungshilfsmitteln, sowie weitere gebräuchliche Additive.

Es wurde überraschend gefunden, dass die erfindungsgemäßen Polyurethane eine deutlich verringerte Tendenz zu Ausblühungen (Blooming) zeigen und dabei im Vergleich zu handelsüblichen thermoplastischen Polyurethanen vergleichbare, gute mechanische Eigenschaften aufweisen.

Gleichzeitig sind die erfindungsgemäßen Polyurethane vorzugsweise transparent. Des Weiteren weisen die erfindungsgemäßen Polyurethane einen nur geringen Gelbgrad (Yellownes Index) auf, d.h. es treten kaum Verfärbungen auf. Oftmals führt die Verwendung biobasierter Rohstoffe zu Verfärbungen im Endprodukt, was sich in einem hohen Gelbgrad (Yellownes Index) der Endprodukte zeigt. (Thermoplastische) Polyurethane mit hohen Gelbgraden sind ebenfalls kundenseitig nicht gewünscht und schränken die potentiellen Anwendungen solcher Produkte zusätzlich ein.

Zur Herstellung der erfindungsgemäßen Polyurethane wird mindestens ein Polyesterpolyol eingesetzt, das auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde, wobei die Mischung aus mindestens zwei Dicarbonsäuren Sebazinsäure umfasst, die zumindest teilweise aus nachwachsenden Rohstoffen gewonnen wurde, und wobei der mindestens eine mehrwertige Alkohol 1,3-Propandiol ist, das zumindest teilweise aus nachwachsenden Rohstoffen gewonnen wurde.

Grundsätzlich können dabei erfindungsgemäß alle dem Fachmann bekannten geeigneten Polyesterole eingesetzt werden. Dabei weisen die eingesetzten Polyesterpolyole erfindungsgemäß vorzugsweise eine mittlere Funktionalität im Bereich von 1,8 bis 2,3, bevorzugt im Bereich von 1,9 bis 2,2, insbesondere von 2 auf. Bevorzugt ist das erfindungsgemäße Polyesterpolyol ein Polyesterdiol. Demgemäß betrifft die vorliegende Erfindung gemäß einer weiteren Ausführungsform ein Polyurethan auf Basis mindestens eines Polyisocyanats und mindestens eines Polyesterdiols, wobei das Polyesterdiol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde.

Geeignete Molekulargewichtsbereiche für die erfindungsgemäß eingesetzten Polyesterpolyole sind dem Fachmann an sich bekannt. Gemäß einer bevorzugten Ausführungsform liegt das Molekulargewicht des Polyesterpolyols im Bereich von 500 bis 4000 g/mol, insbesondere bevorzugt im Bereich von 800 und 3000 g/mol und ganz besonders bevorzugt im Bereich von 1000 und 2500 g/mol.

Erfindungsgemäß besonders geeignete Polyesterpolyole weisen eine OH-Zahl im Bereich von 25 bis 230 mg KOH/g , insbesondere bevorzugt im Bereich von 35 bis 140 mg KOH/g und ganz besonders bevorzugt im Bereich von 40 bis 115 mg KOH/g auf.

Erfindungsgemäß basiert das Polyesterpolyol auf einem mehrwertigen Alkohol, wobei der mindestens eine mehrwertige Alkohol 1,3-Propandiol ist, das zumindest teilweise aus nachwachsenden Rohstoffen gewonnen wurde.

Erfindungsgemäß wird ein mehrwertiger Alkohol eingesetzt, der zumindest teilweise aus nachwachsenden Rohstoffen gewonnen wurde. Dabei ist es möglich, dass der mehrwertige Alkohol teilweise oder vollständig aus nachwachsenden Rohstoffen gewonnen wurde.

Bei dem 1,3-Propandiol kann es sich demgemäß um synthetisch hergestelltes 1,3-Propandiol, insbesondere jedoch um 1,3-Propandiol aus nachwachsenden Rohstoffen ("Bio-1,3-Propandiol"), handeln. Bio-1,3-Propandiol kann beispielsweise aus Mais und/oder Zucker gewonnen werden. Eine weitere Möglichkeit ist die Umwandlung von Glycerinabfällen aus der Biodiesel-Produktion. Gemäß einer weiteren bevorzugten Ausführungsform der Erfindung ist der mehrwertige Alkohol 1,3-Propandiol, das zumindest teilweise aus nachwachsenden Rohstoffen gewonnen wurde.

Erfindungsgemäß basiert das Polyesterpolyol neben mindestens einem mehrwertigen Alkohol auf einer Mischung aus mindestens zwei Dicarbonsäuren, wobei mindestens eine der mindestens zwei Dicarbonsäuren zumindest teilweise aus nachwachsenden Rohstoffen gewonnen wurde wobei die Mischung aus mindestens zwei Dicarbonsäuren Sebazinsäure umfasst, die zumindest teilweise aus nachwachsenden Rohstoffen gewonnen wurde. Geeignete Dicarbonsäuren zur Herstellung von Polyesterpolyolen sind dem Fachmann an sich bekannt.

Erfindungsgemäß wird eine Mischung aus mindestens zwei Dicarbonsäuren eingesetzt, beispielsweise eine Mischung aus zwei, drei oder vier Dicarbonsäuren. Beispielsweise kann es sich im Rahmen der vorliegenden Erfindung um eine Mischung aus zwei oder drei verschiedenen Dicarbonsäuren ausgewählt aus der Gruppe der C2- bis C12-Dicarbonsäuren handeln. Unter C2- bis C12-Dicarbonsäuren werden Dicarbonsäuren verstanden, die aliphatisch oder verzweigt sind, und zwei bis zwölf Kohlenstoffatome aufweisen. Es ist auch möglich, dass erfindungsgemäß eingesetzte Dicarbonsäuren ausgewählt sind aus C2- bis C14-Dicarbonsäuren, bevorzugt C4- bis C12-Dicarbonsäuren und insbesondere bevorzugt um C6- bis C10-Dicarbonsäuren.

Erfindungsgemäß kann eine oder mehrere der eingesetzten Dicarbonsäuren auch als Carbonsäurediester oder als Carbonsäureanhydrid vorliegen. Als Dicarbonsäure können im Prinzip aliphatische und/oder aromatische Dicarbonsäuren eingesetzt werden.

Erfindungsgemäß wird eine Mischung aus mindestens zwei Dicarbonsäuren eingesetzt, wobei mindestens eine der mindestens zwei Dicarbonsäuren zumindest teilweise aus nachwachsenden Rohstoffen gewonnen wurde. Dabei kann die eingesetzte Mischung im Rahmen der vorliegenden Erfindung auch drei oder mehr Dicarbonsäuren enthalten, wobei mindestens eine der enthaltenen Dicarbonsäuren zumindest teilweise aus nachwachsenden Rohstoffen gewonnen wurde. Gemäß einer Ausführungsform der vorliegenden Erfindung besteht die eingesetzte Mischung aus zwei Dicarbonsäuren, wobei mindestens eine der zwei Dicarbonsäuren zumindest teilweise aus nachwachsenden Rohstoffen gewonnen wurde.

Geeignete Dicarbonsäuren können durch spezielle Aufbereitungsverfahren aus natürlichen Rohstoffen gewonnen werden. So kann beispielsweise durch Behandlung von Rizinusöl mit Natrium- oder Kaliumhydroxid bei hohen Temperaturen in Gegenwart von längerkettigen Alkoholen (wie 1 - oder 2-Octanol) je nach Reaktionsbedingungen unter anderem Sebazinsäure in einer Reinheit von > 99,5 % erhalten werden. Sebazinsäure (1,8-Octandicarbonsäure) gehört zur homologen Reihe der aliphatischen Dicarbonsäuren. Neben der Sebazinsäure sind auch Bernsteinsäure und/oder 2-Methylbernsteinsäure erfindungsgemäß besonders geeignet. Diese können beispielsweise aus natürlichen Rohstoffen wie Zucker oder Mais durch Fermentation gewonnen werden. Eine weitere erfindungsgemäß geeignete Dicarbonsäure ist die Azelainsäure, die zumindest teilweise aus nachwachsenden Rohstoffen gewonnen wurde.

In einer besonders bevorzugten Ausführungsform der Erfindung ist die zumindest teilweise aus natürlichen Rohstoffen gewonnene Dicarbonsäure ausgewählt aus der Gruppe bestehend aus Sebazinsäure, Azelainsäure, Dodecandisäure und Bernsteinsäure.

Erfindungsgemäß enthält die eingesetzte Mischung aus nachwachsenden Rohstoffen gewonnene Sebazinsäure.

Auch die weiteren, neben der mindestens einen Dicarbonsäure, die zumindest teilweise aus nachwachsenden Rohstoffen gewonnen wurde, eingesetzten Dicarbonsäuren sind vorzugsweise ausgewählt aus der Gruppe der C2 bis C12 Dicarbonsäuren. Geeignet sind die zuvor genannten Dicarbonsäuren und insbesondere Adipinsäure.

Gemäß einer weiteren Ausführungsform betrifft die vorliegende Erfindung auch ein Polyurethan wie zuvor beschrieben, wobei die Mischung aus mindestens zwei Dicarbonsäuren Sebazinsäure umfasst, die zumindest teilweise aus nachwachsenden Rohstoffen gewonnen wurde, und Adipinsäure.

Erfindungsgemäß ist es auch möglich, dass neben Sebazinsäure, die zumindest teilweise aus nachwachsenden Rohstoffen gewonnen wurde, mindestens eine weitere Dicarbonsäure in der Mischung enthalten ist, die zumindest teilweise auf nachwachsenden Rohstoffen basiert. Demgemäß enthält die Mischung gemäß einer weiteren Ausführungsform der vorliegenden Erfindung zwei Dicarbonsäuren, die beide zumindest teilweise aus nachwachsenden Rohstoffen gewonnen wurden.

Beispielsweise kann die Mischung aus mindestens zwei Dicarbonsäuren mindestens Sebazinsäure und Adipinsäure enthalten, wobei es auch möglich ist, dass Sebazinsäure und Adipinsäure jeweils zumindest teilweise aus nachwachsenden Rohstoffen gewonnen wurden.

Vorzugsweise besteht die Mischung der mindestens zwei Dicarbonsäuren zu mindestens 90 Gew.-% aus Sebazinsäure und Adipinsäure, weiter bevorzugt zu 95 bis 100 Gew.-%, insbesondere von 98 bis 99,99 Gew.-%.

Erfindungsgemäß kann das Mischungsverhältnis der eingesetzten Dicarbonsäuren in der Mischung in weiten Bereichen variieren. Dabei kann das Mischungsverhältnis der mindestens zwei Dicarbonsäuren in mol% gemäß einer bevorzugten Ausführungsform im Bereich von 90:10 bis 10:90, weiter bevorzugt im Bereich von 80:20 bis 20:80, besonders bevorzugt im Bereich von 70:30 bis 30:70 variieren.

Gemäß einer weiter bevorzugten Ausführungsform ist das Mischungsverhältnis der Dicarbonsäuren Sebazinsäure zu Adipinsäure in mol% im Bereich von 90:10 bis 10:90, weiter bevorzugt im Bereich von 80:20 bis 20:80, besonders bevorzugt im Bereich von 70:30 bis 30:70.

Erfindungsgemäß wird mindestens eine der eingesetzten Dicarbonsäuren und auch der eingesetzte mehrwertige Alkohol zumindest teilweise aus nachwachsenden Rohstoffen gewonnen. Zumindest teilweise bedeutet dabei im Rahmen der vorliegenden Erfindung, dass die entsprechende Dicarbonsäure oder der Alkohol zu mindestens 25 % aus nachwachsenden Rohstoffen gewonnen wurden, insbesondere, dass sie zu 50 bis 100 % aus nachwachsenden Rohstoffen gewonnen wurde, bevorzugt zu 75 bis 100 %, weiter bevorzugt zu 85 bis 100 %, insbesondere bevorzugt zu 95 bis 100 %.

Gemäß einer weiteren Ausführungsform der vorliegenden Erfindung werden zur Herstellung der Polyesterpolyole Dicarbonsäuren und mehrwertige Alkohole eingesetzt, die jeweils zumindest teilweise aus nachwachsenden Rohstoffen gewonnen wurden.

Verfahren zur Herstellung von Polyesterpolyolen durch Polykondensation der entsprechenden Hydroxyverbindungen mit Dicarbonsäuren bevorzugt bei erhöhter Temperatur und vermindertem Druck bevorzugt in Gegenwart bekannter Katalysatoren sind allgemein bekannt und vielfältig beschrieben.

Verfahren zur Herstellung von Polyurethanen sind ebenfalls allgemein bekannt. Beispielsweise können thermoplastische Polyurethane durch Umsetzung von Isocyanaten mit Polyesterpolyol und gegebenenfalls Kettenverlängerungsmittel mit einem Molekulargewicht von 50 bis 499 g/mol gegebenenfalls in Gegenwart von Katalysatoren und/oder üblichen Hilfsstoffen hergestellt werden.

Grundsätzlich kann das Verhältnis der eingesetzten Komponenten in weiten Bereichen variieren. Dabei wird das Verhältnis der eingesetzten Komponenten üblicherweise durch das Verhältnis der NCO Gruppen zu den OH-Gruppen beschrieben, wobei die OH-Gruppen die Summe der OH-Gruppen des eingesetzten Polyesterpolyols, Kettenverlängerers und gegebenenfalls weiterer Additive ist.

Erfindungsgemäß liegt das Verhältnis von NCO zu OH Gruppen beispielsweise im Bereich von 0,9 bis 1,1, bevorzugt im Bereich von 0,95 bis 1,05.

Erfindungsgemäß erfolgt die Herstellung von thermoplastischen Polyurethanen durch Umsetzung des Isocyanats mit dem Polyesterpolyol und gegebenenfalls weiteren gegenüber Isocyanaten reaktiven Verbindungen und Kettenverlängerungsmitteln gegebenenfalls in Gegenwart von Katalysatoren und/oder üblichen Hilfsstoffe. Beispielsweise können erfindungsgemäß auch Weichmacher eingesetzt werden. Die erfindungsgemäß vorzugsweise eingesetzten Weichmacher können gegenüber Isocyanaten reaktive Gruppen aufweisen. Es ist jedoch auch möglich, dass die eingesetzten Weichmacher keine gegenüber Isocyanaten reaktiven Gruppen aufweisen. Geeignete Weichmacher sind an sich bekannt und beispielsweise beschrieben in Plastics Additive Handbook, 5th edition, H. Zweifel, ed, Hanser Publishers, München, 2001.

Die Herstellung des erfindungsgemäßen Polyurethans kann auch über die Zwischenstufe von Präpolymeren erfolgen. Hierbei werden zunächst nur Teilketten des Polymers hergestellt, um so beim Endhersteller eine einfachere Verarbeitung, insbesondere der Isocyanat-Komponente zu gewährleisten. Die so bereitgestellten unvollständig reagierten Ausgangsstoffe werden auch als System bezeichnet, die beispielsweise bei der Herstellung von Schuhsohlen eine große Rolle spielen.

Als organische Isocyanate können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'- Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat, Tri-, Tetra-, Penta-, Hexa-, Hepta und/oder Oktamethylendiisocyanat, 2-Methyl-pentamethylen-diisocyanat-1,5, 2-Ethyl-butylendiisocyanat-1,4, Pentamethylen-diisocyanat-1,5, Butylen-diisocyanat-1,4, 1-Isocyanato-3,3,5-trimethyl-5-isocyanatomethyl-cyclohexan (Isophorondiisocyanat, IPDI), 1-Isocyanato-4-[(4-isocyanatocyclohexyl) methyl]cyclohexan (H12MDI), 2,6-Diisocyanatohexancarbonsäureester, 1,4- und/oder 1,3- Bis(isocyanatomethyl)cyclohexan (HXDI), 1,4-Cyclohexan-diisocyanat, 1- Methyl-2,4- und/oder -2,6-cyclohexan-diisocyanat und/oder 4,4-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat, 1-lsocyanato-4-[(4-isocyanatocyclohexyl) methyl]cyclohexan, und/oder IPDI, insbesondere 4,4'- MDI und/oder Hexamethylendiisocyanat und/oder H12MDI.

Gemäß einer weiteren Ausführungsform betrifft die vorliegende Erfindung auch ein Polyurethan wie zuvor beschrieben, wobei das zur Herstellung eingesetzte Polyisocyanat ausgewählt ist aus der Gruppe bestehend aus 2,2'-, 2, 4'- und 4,4`-Diphenylmethandiisocyanat (MDI), 2,4- und 2,6-Toluylendiisocyanat (TDI), Hexamethylendiisocyanat und 1-lsocyanato-4-[(4-isocyanatocyclohexyl)methyl]cyclohexan (H12MDI).

Als Kettenverlängerer können allgemein bekannte aliphatische, araliphatische, aromatische und/oder cycloaliphatische Verbindungen mit einem Molekulargewicht von 50 bis 499 g/mol, bevorzugt 2-funktionelle Verbindungen, eingesetzt werden, beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona und/oder Dekaalkylenglykole mit 3 bis 8 Kohlenstoffatomen, bevorzugt unverzweigte Alkandiole, insbesondere Propan-1,3-diol und Butan-1,4-diol.

Erfindungsgemäß bevorzugt ist der Kettenverlängerer ausgewählt aus der Gruppe bestehend aus aliphatischen C2-C6-Diolen, weiter bevorzugt aus der Gruppe bestehend aus 1,3-Propandiol, 1,4-Butandiol und 1,6-Hexandiol.

Gemäß einer weiteren Ausführungsform betrifft die vorliegende Erfindung auch ein Polyurethan wie zuvor beschrieben, wobei der mindestens eine Kettenverlängerer ausgewählt ist aus der Gruppe bestehend aus C2 bis C6-Diolen.

Erfindungsgemäß wurde der eingesetzte Kettenverlängerer zumindest teilweise aus nachwachsenden Rohstoffen gewonnen. Erfindungsgemäß ist es möglich, dass der eingesetzte Kettenverlängerer teilweise oder vollständig aus nachwachsenden Rohstoffen gewonnen wurde.

Gemäß einer weiter bevorzugten Ausführungsform ist der Kettenverlängerer demgemäß ausgewählt aus der Gruppe bestehend aus 1,3-Propandiol und 1,3-Propandiol, das zumindest teilweise aus nachwachsenden Rohstoffen gewonnen wurde.

Erindungsgemäß sind mindestens eine der mindestens zwei Dicarbonsäuren und der zur Herstellung der Polyesterpolyole eingesetzte mehrwertige Alkohol und der eingesetzte Kettenverlängerer jeweils zumindest teilweise aus nachwachsenden Rohstoffen gewonnen worden.

Geeignete Katalysatoren, die insbesondere die Reaktion zwischen den NCO-Gruppen der Polyisocyanate und der Polyol-Komponente beschleunigen, sind die nach dem Stand der Technik bekannten und üblichen Verbindungen und der Literatur zu entnehmen. Geeignete Katalysatoren im Rahmen der vorliegenden Erfindung sind beispielsweise tertiären Amine, wie z. B. Triethylamin, Dimethylcyclohexylamin, N-Methylmorpholin, N, N'- Dimethylpiperazin, 2-(Dimethylaminoethoxy)-ethanol, Diazabicyclo-(2,2,2)- octan und ähnliche sowie insbesondere organische Metallverbindungen wie Titansäureester, Eisenverbindungen wie z. B. Eisen- (VI)-acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung eingesetzt.

Neben Katalysatoren können den Aufbaukomponenten, d.h. den Polyolen, Isocyanaten und Kettenverlängerern, auch übliche Hilfsmittel hinzugefügt werden. Genannt seien beispielsweise Treibmittel, oberflächenaktive Substanzen, Flammschutzmittel, Keimbildungsmittel, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel, Weichmacher und Metalldeaktivatoren. Als Hydrolyseschutzmittel werden bevorzugt oligomere und/oder polymere aliphatische oder aromatische Carbodiimide verwendet. Um die erfindungsgemäßen Polyurethan gegen Alterung zu stabilisieren, werden dem Polyurethan bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Thiosynergisten, Organophosphorverbindungen des trivalenten Phosphors, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001, S.98-S136. Ist das erfindungsgemäße Polyurethan während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S 116-S. 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1- dimethylethyl)-4-hydroxyphenyl)propionate) (Irganox^{®}1010) oder andere hochmolekulare Kondensationsprodukte aus entsprechenden Antioxidantien. Die phenolischen Antioxidantien werden im Allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des Polyurethans. Weiterhin werden bevorzugt Antioxidantien verwendet, die amorph oder flüssig sind. Auch wenn die erfindungsgemäßen Polyurethane aufgrund ihrer bevorzugten Zusammensetzung deutlich stabiler gegen ultravioletter Strahlung sind als z. B. mit Phthalaten oder Benzoaten weichgemachte Polyurethane, so ist eine Stabilisierung enthaltend nur phenolische Stabilisatoren oft nicht ausreichend. Aus diesem Grund werden die erfindungsgemäßen Polyurethane, die UV- Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Oxalsäureamide (O-xanilide), insbesondere 2-Ethoxy-2'-ethyloxanilid, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV- Absorber ein Molekulargewicht von nicht größer als 5000 g/mol, besonders bevorzugt von nicht größer als 2000 g/mol aufweisen. Besonders geeignet als UV- Absorber ist die Gruppe der Benzotriazole. Beispiele für besonders geeignete Benzotriazole sind Tinuvin^{®}213, Tinuvin^{®}328, Tinuvin^{®}571, sowie Tinuvin^{®} 384 und das Eversorb^{®} 82. Bevorzugt werden die UV-Absorber in Mengen zwischen 0,01 und 5 Gew.-%, bezogen auf die Gesamtmasse Polyurethan zudosiert, besonders bevorzugt zwischen 0,1 und 2,0 Gew.-%, insbesondere zwischen 0,2 und 0,5 Gew.-%, jeweils bezogen auf das Gesamtgewicht des Polyurethans. Oft ist eine oben beschriebene UV-Stabilisierung basierend auf einem Antioxidans und einem UV-Absorber noch nicht ausreichend, um eine gute Stabilität des erfindungsgemäßen Polyurethans gegen den schädlichen Einfluss von UV-Strahlen zu gewährleisten. In diesem Falle kann bevorzugt zusätzlich zu dem Antioxidans und dem UV-Absorber, noch ein Hindered-Amine Light Stabilizer (HALS) zugegeben werden. Eine besonders bevorzugte UV-Stabilisierung enthält eine Mischung aus einem phenolischen Stabilisator, einem Benzotriazol und einer HALS-Verbindung in den oben beschriebenen bevorzugten Mengen. Es können aber auch Verbindungen eingesetzt werden, die die funktionellen Gruppen der Stabilisatoren vereinigen, wie zum Beispiel sterische gehinderte Piperidylhydroxybenzyl-Kondensationsprodukte, wie zum Beispiel Di(1,2,2,6,6-pentamethyl-4-piperidyl)-2-butyl-2-(3,5-di-tert-butyl-4- hydroxybenzyl)malonate, Tinuvin^{®}144.

Besonders geeignet sind auch Wachse, die sowohl bei der technischen Herstellung der Polyurethane als auch bei ihrer Verarbeitung wichtige Aufgaben übernehmen. Das Wachs dient als friktionsminderndes inneres und äußeres Gleitmittel und verbessert so die Fließeigenschaften des Polyurethans. Zusätzlich soll es als Trennmittel das Ankleben des Polyurethans an das umgebende Material (z. B. das Werkzeug) verhindern, und als Dispergator für andere Zusatzstoffe, z. B. Pigmente und Antiblockmittel, wirken. Geeignet sind z. B. Fettsäureester, wie Stearinsäureester und Montansäureester und deren Metallseifen, daneben Fettsäureamide, wie Stearylamide und Ölsäureamide, oder auch Polyethylenwachse. Eine Übersicht der in Thermoplasten eingesetzten Wachse findet sich in H. Zweifel (Ed.): Plastics Additives Handbook, 5. Ausgabe, Hanser Verlag, München 2001, S. 443 ff., EP-A 308 683, EP-A 670 339 und JP-A 5 163 431.

Weiter können auch Ester- und Amidkombinationen gemäß DE-A 19 607 870 und Wachs-Mischungen von Montansäure und Fettsäurederivaten (DE-A 196 49 290) zugesetzt werden, weiterhin auch Hydroxy-Stearylsäureamide gemäß DE 10 2006 009 096 A1.

In einer besonders bevorzugten Ausführungsform werden Fettsäuren gemäß DE- A-19706452 mit 24 bis 34 Kohlenstoffatomen und/oder Ester und/oder Amide dieser Fettsäuren bei Polyurethanen mit gewünschter verminderter Tendenz zur Aufnahme und/oder Abgabe von Substanzen eingesetzt, wobei die Fettsäuren und/oder deren Derivate in einen Gewichtsanteil von 0,001 bis 15 Gew.-%, bezogen auf das Gesamtgewicht der Polyisocyanat-Polyadditionsprodukte, eingesetzt werden. In einer weiteren bevorzugten Ausführungsform wird eine Mischung gemäß EP- A-1826225 aus den Umsetzungsprodukten von Alkylendiaminen mit a) einer oder mehreren linearen Fettsäuren und von Alkylendiaminen mit b) 12- Hydroxystearinsäure und/oder aus den Umsetzungsprodukten von Alkylendiaminen mit c) 12-Hydroxystearinsäure und einer oder mehreren linearen Fettsäuren eingesetzt. Diese Mischung enthält also die Umsetzungsprodukte von Alkylendiamin mit a) und b) und/oder c).

Nähere Angaben über die oben genannten Hilfsmittel und Zusatzstoffe sind der Fachliteratur zu entnehmen, z. B. Plastics Additive Handbook, 5th edition, H. Zweifel, ed, Hanser Publishers, München, 2001. Alle in dieser Schrift genannten Molekulargewichte weisen die Einheit [g/mol] auf.

Die vorliegende Erfindung betrifft auch ein Verfahren zur Herstellung eines thermoplastischen Polyurethans, mindestens umfassend die Umsetzung mindestens eines Polyisocyanats und mindestens eines Polyesterpolyols, wobei das Polyesterpolyol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde, wobei das Polyurethan mindestens einen Kettenverlängerer enthält,
wobei die Mischung aus mindestens zwei Dicarbonsäuren Sebazinsäure umfasst, die zumindest teilweise aus nachwachsenden Rohstoffen gewonnen wurde,
wobei der mindestens eine mehrwertige Alkohol 1,3-Propandiol ist, das zumindest teilweise aus nachwachsenden Rohstoffen gewonnen wurde,
wobei mindestens eine der mindestens zwei Dicarbonsäuren und der zur Herstellung der Polyesterpolyole eingesetzte mehrwertige Alkohol und der eingesetzte Kettenverlängerer jeweils zumindest teilweise aus nachwachsenden Rohstoffen gewonnen worden sind.

Die Herstellung der Polyurethane kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot Verfahren erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten sowie gegebenenfalls Kettenverlängerer, Katalysator und/oder Zusatzstoffe einzeln oder als Gemisch in den Extruder eingeführt, z. B. bei Temperaturen von 100 bis 280 °C, vorzugsweise 140 bis 250 °C zur Reaktion gebracht, das erhaltene Polyurethan wird extrudiert, abgekühlt und granuliert.

Die Verarbeitung der erfindungsgemäßen Polyurethane, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z. B. Spritzguss, Kalendrieren oder Extrusion.

Die vorliegende Erfindung betrifft auch die Verwendung eines Polyurethans wie zuvor beschrieben oder eines Polyurethans erhältlich gemäß einem Verfahren wie zuvor beschrieben zur Herstellung von Formkörpern, Schläuchen, Folien oder Fasern und non-woven Artikeln.

Die vorliegende Erfindung betrifft auch Formkörper, Folie, Schlauch, Fasern oder non-woven Artikel umfassend ein Polyurethan wie zuvor beschrieben oder ein Polyurethan erhältlich gemäß einem Verfahren wie zuvor beschrieben.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Im Folgenden wird die Erfindung anhand von Beispielen näher erläutert.

### Beispiele

### 1. Einsatzstoffe

| | |
|---|---|
| Polymerpolyol 1 | ist ein Polyesterdiol aufgebaut aus Sebazinsäure (aus nachwachsenden Rohstoffen) und 1,3-Propandiol (aus nachwachsenden Rohstoffen), Molmasse 1440g/mol, OH-Zahl = 78 |
| | |
| Polymerpolyol 2 | ist ein Polyesterdiol aufgebaut aus Azelainsäure (aus nachwachsenden Rohstoffen) und 1,3-Propandiol (aus nachwachsenden Rohstoffen), Molmasse 1400g/mol, OH-Zahl = 80 |
| | |
| Polymerpolyol 3 | ist ein Polyesterdiol aufgebaut aus Sebazinsäure (aus nachwachsenden Rohstoffen), Adipinsäure (Verhältnis der beiden Dicarbonsäuren in mol% 1:1) und 1,3-Propandiol (aus nachwachsenden Rohstoffen), Molmasse 1400g/mol, OH-Zahl = 80 |
| | |
| Polymerpolyol 4 | ist ein Polyesterdiol aufgebaut aus Sebazinsäure (aus nachwachsenden Rohstoffen), Azelainsäure (aus nachwachsenden Rohstoffen) (Verhältnis der beiden Dicarbonsäuren in mol% 1:1) und 1,3-Propandiol (aus nachwachsenden Rohstoffen), Molmasse 1500g/mol, OH-Zahl = 74 |
| | |
| Kettenverlängerer 1 (KV1) | ist 1,3-Propandiol (aus nachwachsenden Rohstoffen), Molmasse 76,09 g/mol |
| | |
| Kettenverlängerer 2 (KV2) | ist 1,4-Butandiol, Molmasse 90,12 g/mol |
| | |
| Isocyanat 1 | ist 4,4'-Diphenylmethandiisocyanat (4,4'-MDI), Molmasse 250,26 g/mol |
| | |
| Hydrolyseschutz 1 | ist ein Carbodiimid basiertes Hydrolyseschutzmittel (Elastostab^{®} H01) |

### 2. Herstellbeispiele

### 2.1 Allgemeines Verarbeitungsverfahren 1

Das jeweilige Polymerpolyol wird zusammen mit Kettenverlängerer 1 und Isocyanat 1 zur Reaktion gebracht. Hydrolyseschutz 1 wird ebenfalls zur Reaktionsmischung gegeben. Die erhaltene Reaktionsmischung wird auf eine beheizbare Platte ausgegossen und für 10 Minuten bei 120 °C ausreagiert. Anschließend wird die erhaltene Polymerplatte bei 80 °C für 24 Stunden getempert. Die Polymerplatte wird anschließend granuliert und das Granulat im Spritzgussverfahren zu einer Prüfplatte geformt.

### 2.2 Beispiel 1 (Vergleich)

Nach Verarbeitungsverfahren 1 werden 56,95 Gew.-% Polymerpolyol 1, 7,96 Gew.-% Kettenverlängerer 2, 34,63 Gew.-% Isocyanat 1 und 0,46 Gew.-% Hydrolyseschutz 1 umgesetzt. Die Ergebnisse sind in Tabelle 1 dargestellt.

### 2.3 Beispiel 2 (Vergleich)

Nach Verarbeitungsverfahren 1 werden 64,83 Gew.-% Polymerpolyol 2, 5,32 Gew.-% Kettenverlängerer 1, 29,33 Gew.-% Isocyanat 1 und 0,52 Gew.-% Hydrolyseschutz 1 umgesetzt. Die Ergebnisse sind in Tabelle 1 dargestellt.

### 2.4 Beispiel 3 (erfindungsgemäß)

Nach Verarbeitungsverfahren 1 werden 65,64 Gew.-% Polymerpolyol 4, 5,32 Gew.-% Kettenverlängerer 1, 28,51 Gew.-% Isocyanat 1 und 0,53 Gew.-% Hydrolyseschutz 1 umgesetzt. Die Ergebnisse sind in Tabelle 1 dargestellt.

### 2.5 Beispiel 4 (erfindungsgemäß)

Nach Verarbeitungsverfahren 1 werden 62,95 Gew.-% Polymerpolyol 3, 5,77 Gew.-% Kettenverlängerer 1, 30,64 Gew.-% Isocyanat 1 und 0,63 Gew.-% Hydrolyseschutz 1 umgesetzt. Die Ergebnisse sind in Tabelle 1 dargestellt.

**Tabelle 1:**

| | Beispiel 1 | Beispiel 2 | Beispiel 3 | Beispiel 4 |
|---|---|---|---|---|
| Härte [Shore A] | 86 | 86 | 85 | 87 |
| Zugfestigkeit [MPa] | 38 | 29 | 39 | 41 |
| Reißdehnung [%] | 530 | 470 | 460 | 460 |
| Reißfestigkeit [N/mm] | 72 | 69 | 64 | 78 |
| Abrieb [mm³] | 26 | 63 | 33 | 24 |
| Dichte [g/cm³] | 1,168 | 1,166 | 1,155 | 1,191 |
| Ausblühen | sehr stark | sehr stark | sehr schwach | sehr schwach |

### 3. Messmethoden

Die einzelnen Parameter werden nach folgenden Methoden bestimmt:

| | |
|---|---|
| Härte (Shore A): | DIN 53505 |
| Zugfestigkeit: | DIN 53504 |
| Reißdehnung: | DIN 53504 |
| Reißfestigkeit: | DIN ISO 34-1, B (b) |
| Abrieb: | DIN ISO 4649 |
| Dichte: | DIN ISO 1183-1, A |

| | |
|---|---|
| Ausblühen: | Nach Lagerung der Testplatten für die Dauer von 4 Wochen nach Herstellung bei Raumtemperatur wird die Stärke der Ausblühungen optisch beurteilt. |

### 4. Ergebnis

Wie den Beispielen zu entnehmen ist, sind die mechanischen Werte aller Versuche auf ähnlichem Niveau. Allerdings reduziert sich überraschenderweise der Grad der Ausblühungen bei den erfindungsgemäß hergestellten thermoplastischen Polyurethanen deutlich. Die thermoplastischen Polyurethane, die als Vergleichsbeispiele herangezogen werden, weisen nach 4 Wochen Lagerung bei Raumtemperatur einen deutlich sichtbaren weißen, opaken Belag auf den Prüfplatten auf. Die erfindungsgemäß hergestellten thermoplastischen Polyurethane weisen nach 4 Wochen Lagerung bei Raumtemperatur hingegen nur geringste Anzeichen einer Belagbildung auf. Dieser Unterschied ist mit dem Auge deutlich wahrzunehmen.

## Patentansprüche

1. Thermoplastisches Polyurethan auf Basis mindestens eines Polyisocyanats und mindestens eines Polyesterpolyols, wobei das Polyesterpolyol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde, wobei das Polyurethan mindestens einen Kettenverlängerer enthält,
wobei die Mischung aus mindestens zwei Dicarbonsäuren Sebazinsäure umfasst, die zumindest teilweise aus nachwachsenden Rohstoffen gewonnen wurde, und
wobei der mindestens eine mehrwertige Alkohol 1,3-Propandiol ist, das zumindest teilweise aus nachwachsenden Rohstoffen gewonnen wurde,
wobei mindestens eine der mindestens zwei Dicarbonsäuren und der zur Herstellung der Polyesterpolyole eingesetzte mehrwertige Alkohol und der eingesetzte Kettenverlängerer jeweils zumindest teilweise aus nachwachsenden Rohstoffen gewonnen worden sind.

2. Polyurethan gemäß Anspruch 1, wobei die weiteren eingesetzten Dicarbonsäuren ausgewählt sind aus der Gruppe der C2 bis C12 Dicarbonsäuren.

3. Polyurethan gemäß einem der Ansprüche 1 oder 2, wobei die Mischung aus mindestens zwei Dicarbonsäuren Sebazinsäure umfasst, die zumindest teilweise aus nachwachsenden Rohstoffen gewonnen wurde, und Adipinsäure.

4. Polyurethan gemäß Anspruch 3, wobei Sebazinsäure und Adipinsäure im molaren Verhältnis von 80:20 bis 20:80, bevorzugt von 70:30 bis 30:70 eingesetzt werden.

5. Polyurethan gemäß einem der Ansprüche 1 bis 4, wobei das Polyisocyanat ausgewählt ist aus der Gruppe bestehend aus 2,2'-, 2, 4`- und 4,4`-Diphenylmethandiisocyanat (MDI), 2,4- und 2,6-Toluylendiisocyanat (TDI), Hexamethylendiisocyanat und 1-lsocyanato-4-[(4-isocyanatocyclohexyl)methyl]cyclohexan (H12MDI).

6. Polyurethan gemäß einem der Ansprüche 1 bis 5, wobei der mindestens eine Kettenverlängerer ausgewählt ist aus der Gruppe bestehend aus C2- bis C6-Diolen.

7. Verfahren zur Herstellung eines thermoplastischen Polyurethans, mindestens umfassend die Umsetzung mindestens eines Polyisocyanats und mindestens eines Polyesterpolyols, wobei das Polyesterpolyol auf mindestens einem mehrwertigen Alkohol und einer Mischung aus mindestens zwei Dicarbonsäuren basiert, wobei mindestens eine der mindestens zwei Dicarbonsäuren zumindest teilweise aus nachwachsenden Rohstoffen gewonnen wurde, wobei das Polyurethan mindestens einen Kettenverlängerer enthält,
wobei die Mischung aus mindestens zwei Dicarbonsäuren Sebazinsäure umfasst, die zumindest teilweise aus nachwachsenden Rohstoffen gewonnen wurde,
wobei der mindestens eine mehrwertige Alkohol 1,3-Propandiol ist, das zumindest teilweise aus nachwachsenden Rohstoffen gewonnen wurde,
wobei mindestens eine der mindestens zwei Dicarbonsäuren und der zur Herstellung der Polyesterpolyole eingesetzte mehrwertige Alkohol und der eingesetzte Kettenverlängerer jeweils zumindest teilweise aus nachwachsenden Rohstoffen gewonnen worden sind.

8. Verwendung eines Polyurethans gemäß einem der Ansprüche 1 bis 6 oder eines Polyurethans erhältlich gemäß einem Verfahren gemäß Anspruch 7 zur Herstellung von Formkörpern, Schläuchen, Folien, non-woven Artikeln oder Fasern.

9. Formkörper, Folie, Schlauch, non-woven Artikel oder Fasern umfassend ein Polyurethan gemäß einem der Ansprüche 1 bis 6 oder ein Polyurethan erhältlich gemäß einem Verfahren gemäß Anspruch 7.

## Claims

1. Thermoplastic polyurethane based on at least one polyisocyanate and at least one polyester polyol, wherein the polyester polyol is based on at least one polyhydric alcohol and a mixture of two or more dicarboxylic acids, wherein at least one of the two or more dicarboxylic acids is at least partly obtained from renewable raw materials, wherein the polyurethane comprises at least one chain extender,
wherein the mixture of two or more dicarboxylic acids comprises a sebacic acid at least partly obtained from renewable raw materials and
wherein the at least one polyhydric alcohol is a 1,3-propanediol at least partly obtained from renewable raw materials,
wherein at least one of the two or more dicarboxylic acids and the polyhydric alcohol used for producing the polyester polyols and the chain extender employed were at least partly obtained from renewable raw materials.

2. Polyurethane according to Claim 1, wherein the further dicarboxylic acids employed are selected from the group of C2 to C12 dicarboxylic acids.

3. Polyurethane according to either of Claims 1 or 2, wherein the mixture of two or more dicarboxylic acids comprises a sebacic acid at least partly obtained from renewable raw materials, and adipic acid.

4. Polyurethane according to Claim 3, wherein sebacic acid and adipic acid are employed in a molar ratio of 80:20 to 20:80, preferably of 70:30 to 30:70.

5. Polyurethane according to any of Claims 1 to 4, wherein the polyisocyanate is selected from the group consisting of 2,2'-, 2,4'- and 4,4'-diphenylmethane diisocyanate (MDI), 2,4- and 2,6-tolylene diisocyanate (TDI), hexamethylene diisocyanate and 1-isocyanato-4-[(4-isocyanatocyclohexyl)methyl]cyclohexane (H12MDI).

6. Polyurethane according to any of Claims 1 to 5, wherein the at least one chain extender is selected from the group consisting of C2 to C6 diols.

7. Process for producing a thermoplastic polyurethane, which process at least comprises the step of reacting at least one polyisocyanate and at least one polyester polyol, wherein the polyester polyol is based on at least one polyhydric alcohol and a mixture of two or more dicarboxylic acids, wherein at least one of the two or more dicarboxylic acids was at least partly obtained from renewable raw materials, wherein the polyurethane comprises at least one chain extender,
wherein the mixture of two or more dicarboxylic acids comprises a sebacic acid at least partly obtained from renewable raw materials,
wherein the at least one polyhydric alcohol is a 1,3-propanediol at least partly obtained from renewable raw materials,
wherein at least one of the two or more dicarboxylic acids and the polyhydric alcohol used for producing the polyester polyols and the chain extender employed were at least partly obtained from renewable raw materials.

8. Use of a polyurethane according to any of Claims 1 to 6 or a polyurethane obtainable by a process according to Claim 7 for producing moldings, hoses, self-supporting film/sheet, non-woven articles or fiber.

9. Molding, self-supporting film/sheet, hose, non-woven article or fiber comprising a polyurethane according to any of Claims 1 to 6 or a polyurethane obtainable by a process according to Claim 7.

## Revendications

1. Polyuréthane thermoplastique à base d'au moins un polyisocyanate et d'au moins un polyesterpolyol, le polyesterpolyol étant à base d'au moins un alcool polyhydrique et d'un mélange d'au moins deux acides dicarboxyliques, au moins un desdits au moins deux acides dicarboxyliques ayant été obtenu au moins en partie à partir de matières premières renouvelables, le polyuréthane contenant au moins un extenseur de chaîne,
dans lequel le mélange d'au moins deux acides dicarboxyliques comprend de l'acide sébacique qui a été obtenu au moins en partie à partir de matières premières renouvelables, et
dans lequel ledit au moins un alcool polyhydrique est du 1,3-propanediol qui a été obtenu au moins en partie à partir de matières premières renouvelables,
dans lequel au moins un desdits au moins deux acides dicarboxyliques et l'alcool polyhydrique utilisé dans la préparation des polyesterpolyols et l'extenseur de chaîne utilisé ont été obtenus chacun au moins en partie à partir de matières premières renouvelables.

2. Polyuréthane selon la revendication 1, dans lequel les autres acides dicarboxyliques utilisés sont choisis dans le groupe des acides dicarboxyliques en C2 à C12.

3. Polyuréthane selon l'une quelconque des revendications 1 et 2, dans lequel le mélange d'au moins deux acides dicarboxyliques comprend de l'acide sébacique qui a été obtenu au moins en partie à partir de matières premières renouvelables, et de l'acide adipique.

4. Polyuréthane selon la revendication 3, dans lequel l'acide sébacique et l'acide adipique sont utilisés dans le rapport molaire de 80:20 à 20:80, de préférence de 70:30 à 30:70.

5. Polyuréthane selon l'une quelconque des revendications 1 à 4, dans lequel le polyisocyanate est choisi dans le groupe constitué par le 2,2'-, le 2,4'-et le 4,4'-diisocyanate de diphénylméthane (MDI), le 2,4- et le 2,6-diisocyanate de toluylène (TDI), le diisocyanate d'hexaméthylène et le 1-isocyanato-4-[(4-isocyanatocyclohexyl)méthyl]cyclohexane (H12MDI).

6. Polyuréthane selon l'une quelconque des revendications 1 à 5, dans lequel ledit au moins un extenseur de chaîne est choisi dans le groupe constitué par les diols en C2 à C6.

7. Procédé pour la préparation d'un polyuréthane thermoplastique, comprenant au moins la mise en réaction d'au moins un polyisocyanate et d'au moins un polyesterpolyol, le polyesterpolyol étant à base d'au moins un alcool polyhydrique et d'un mélange d'au moins deux acides dicarboxyliques, au moins un desdits au moins deux acides dicarboxyliques ayant été obtenu au moins en partie à partir de matières premières renouvelables, le polyuréthane contenant au moins un extenseur de chaîne,
dans lequel le mélange d'au moins deux acides dicarboxyliques comprend de l'acide sébacique qui a été obtenu au moins en partie à partir de matières premières renouvelables,
dans lequel ledit au moins un alcool polyhydrique est du 1,3-propanediol qui a été obtenu au moins en partie à partir de matières premières renouvelables,
dans lequel au moins un desdits au moins deux acides dicarboxyliques et l'alcool polyhydrique utilisé dans la préparation des polyesterpolyols et l'extenseur de chaîne utilisé ont été obtenus chacun au moins en partie à partir de matières premières renouvelables.

8. Utilisation d'un polyuréthane selon l'une quelconque des revendications 1 à 6 ou d'un polyuréthane pouvant être obtenu conformément à un procédé selon la revendication 7, pour la production de corps moulés, de tuyaux souples, de films, d'articles non-tissés ou de fibres.

9. Corps moulé, film, tuyau souple, article non-tissé ou fibres comprenant un polyuréthane selon l'une quelconque des revendications 1 à 6 ou un polyuréthane pouvant être obtenu conformément à un procédé selon la revendication 7.
